(19) Europäisches Patentamt
European Patent Office
Office européen des brevets

(11) EP 0 719 827 B1

(12) **EUROPEAN PATENT SPECIFICATION**

(45) Date of publication and mention of the grant of the patent:
**12.05.2004 Bulletin 2004/20**

(51) Int Cl.[7]: **C08K 9/00**, C08J 3/22, C08L 21/00 // (C08K9/00, 9:04, 9:12)

(21) Application number: **95309386.1**

(22) Date of filing: **21.12.1995**

(54) **Method for improving the moisture resistance of a vulcanisation accelerator, and moisture-resistant vulcanisation accelerator**

Verfahren zur Verbesserung des Feuchtigkeitswiderstandes eines Vulkanisationsbeschleunigers und feuchtigkeitsbeständiger Vulkanisiationsbeschleuniger

Procédé pour améliorer la résistance à l'humidité d'un accélérateur de vulcanisation et accélérateur de vulcanisation résistant à l'humidité

(84) Designated Contracting States:
**DE FR GB**

(30) Priority: **27.12.1994 JP 32645994**

(43) Date of publication of application:
**03.07.1996 Bulletin 1996/27**

(73) Proprietor: **SUMITOMO RUBBER INDUSTRIES LIMITED**
**Kobe-shi, Hyogo-ken (JP)**

(72) Inventor: **Muraoka, Kiyoshige**
**Kobe-shi, Hyogo (JP)**

(74) Representative: **Manitz, Finsterwald & Partner**
**Postfach 31 02 20**
**80102 München (DE)**

(56) References cited:
**US-A- 1 511 984** **US-A- 1 544 699**

- **INTERNATIONAL POLYMER SCIENCE AND TECHNOLOGY, vol. 20, no. 2, 1 January 1993 pages T24-T27, XP 000377888 NOSNIKOV A A ET AL 'PROPERTIES OF POLYCHLOROPRENE VULCANISATES FILLED WITH MODIFIED SILICA FILLER'**
- **DATABASE WPI Section Ch, Week 8102 Derwent Publications Ltd., London, GB; Class A60, AN 81-01072D & JP-A-55 144 040 ( KAWAGUCHI CHEM IND KK) , 11 November 1980**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a method for improving the moisture resistance of a vulcanisation accelerator and a vulcanisation accelerator having a moisture resistance improved by such method.

Since rubber composition tends to have inconstant qualities due to various factors, it is a common practice to conduct in-process inspections at different steps to prevent defective products from being sent to next steps.

One of the major factors adversely affecting the scorching, vulcanisation speed and physical properties of rubber compositions, which are the characteristics to be subjected to such in-process inspections, is moisture contained in unvulcanised rubbers. For Example, India Rubber World, 129,751 (published in 1954) and Publication No. 52,529 (in 1979) of Japanese Rubber Industries Association have reported the effects of moisture contained in unvulcanised rubber compositions, in particular, a considerable influence of moisture on vulcanisation reactions in the rubber compositions. For this reason the inclusion of excessive moisture into rubber compositions has conventionally been avoided by installing control systems such as a moisture conditioning system.

One of the causes of the inclusion of moisture into rubber compositions is moisture absorption by compounding ingredients such as vulcanisation accelerator. Since the amounts of moisture to be absorbed by the compounding ingredients vary depending on the kinds of compounding ingredients to be used and since some of the ingredients, for example, a vulcanisation accelerator rapidly absorb moisture, it is difficult to control the inclusion of moisture by merely conditioning with equipment or the like.

The absorption of moisture by a vulcanisation accelerator is one of the major causes of the inclusion of moisture which leads to rubber compositions of inconsistant qualities. Vulcanisation accelerators, in general, slightly decompose even at normal temperatures, and the decomposition is accelerated in the presence of moisture. Since vulcanisation accelerators based on sulfenamide, guanidine, aldehyde-amine and the like have molecular structures which readily absorb moisture, they permit a hydrolytic reaction to readily proceed when allowed to stand under high temperature and humidity conditions. Accordingly, if a vulcanisation accelerator is left to stand under high temperature and humidity conditions for a long period of time, the active vulcanisation accelerating components thereof are reduced, while at the same time impurities are generated by the decomposition which will adversely affect vulcanisation reactions and later physical properties of vulcanised rubber, for example, an amino compound generated by the decomposition causes the scorch time to be shortened.

Therefore, to minimise inconstancy in the quality of a rubber composition, it is critical to inhibit moisture absorption and any decomposition reaction of a vulcanisation accelerator during the period after it is purchased until it is mixed with rubber.

This invention has been accomplished in view of the foregoing background. It is, therefore, an object of this invention to improve the moisture resistance of a vulcanisation accelerator.

It is well known that silica generally acts as an adsorbent and, therefore, is required to be blended in a rubber composition together with polyethylene glycol, a silane coupling agent or the like. Without such agents, silica adsorbs a vulcanisation accelerator, thereby causing inhibition of a vulcanisation reaction or insufficient vulcanisation which results in an insufficiently crosslinked product.

The inventor of this invention has found that the aforementioned problem occurs due to an extremely excessive amount of silica mixed in a system (more than 10 times as large as proper amount) relative to the amount of a vulcanisation accelerator mixed therein. Specifically, silica is used in an amount more than 10 times as large as the amount of the vulcanisation accelerator. It has also been found that when the amount of silica mixed is equal to or less than that of the vulcanisation accelerator, the moisture resistance of the vulcanisation accelerator is considerably improved with little effect on the intended properties of the resulting rubber composition. Thus the present invention has been accomplished based on these discoveries and findings.

According to one aspect of the present invention, there is provided a method for improving the moisture resistance of a vulcanisation accelerator, comprising mixing 5 to 50 parts by weight of silica with 100 parts by weight of the vulcanisation accelerator.

According to another aspect of the present invention, there is provided a moisture-resistant vulcanisation accelerator comprising 5 to 50 parts by weight of silica and 100 parts by weight of a vulcanisation accelerator.

These and other objects, features and attendant advantages of the invention will become apparent from the following detailed description.

The method of the present invention is applicable to any vulcanisation accelerators generally available from the market. Specifically, examples of such vulcanisation accelerators include sulfenamide-based vulcanisation accelerators such as CBS (N-cyclohexyl-2-benzothiazyl sulfenamide), DCBS (N,N-dicyclohexyl-2-benzothiazyl sulfenamide) and TBBS (N-tert-butyl-2-benzothiazyl sulfenamide); guanidine-based vulcanisation accelerators such as DPG (diphenylguanidine); thiazole-based vulcanisation accelerators such as MBT (2-mercaptobenzothiazole) and MBTS (dibenzothiazyl disulfide); thiuram-based vulcanisation accelerators such as TMTM (tetramethylthiuram monosulfide) and TMTD (tetramethylthiuram disulfide); and aldehyde ammonia-based vulcanisation accelerators such as H (hexamethylenetetramine).

Silica for use in the present invention preferably has a BET surface area of 100 to 300 $m^2/g$ and an average particle diameter of 10 to 30 nm, though the type of silica is not limited.

The amount of silica to be blended is 5 to 50 parts by weight, preferably 5 to 20 parts by weight, more preferably 5 to 10 parts by weight relative to 100 parts by weight of the vulcanisation accelerator. If the amount of the silica is less than 5 parts by weight, sufficient improvement in the moisture resistance is not found. If the amount of silica is more than 50 parts by weight, the initial properties of the resultant mixture are influenced by adsorption of silica.

Though blending of silica at any time before the rubber compounding provides some improvements to the vulcanisation accelerator, it is preferred that silica is blended immediately after the vulcanisation accelerator is prepared by the manufacturer thereof, since the accelerator starts to absorb moisture and decompose immediately after it is prepared and continues such reactions until it reaches a user or until the user blends the accelerator during the milling of rubber.

The moisture-resistant vulcanisation accelerator thus obtained by the abovementioned method can be used in rubber compounding, like conventional vulcanisation accelerators which are not treated with the method. Namely, the moisture-resistant vulcanisation accelerator can be added to a rubber composition together with other additives such as antioxidant during the rubber compounding.

The moisture-resistant vulcanisation accelerator improved by the method for improving moisture resistance of the present invention hardly absorbs moisture. As typically known by silica gel, silica has a silanol group (-S-OH) on the surface thereof which will form a hydrogen bond with a hydrogen molecule, and hence exhibits excellent adsorbability. The moisture-resistant vulcanisation accelerator prepared by mixing a predetermined amount of silica and a predetermined amount of a vulcanisation accelerator is considered to become less water-absorptive conceivably because hydrogen molecules are preferentially adsorbed by the silica rather than by the vulcanisation accelerator due to the adsorbability of the silica, though this mechanism is not clearly known. As a result, the moisture-resistant vulcanisation accelerator is restrained from absorbing moisture and decomposing.

The moisture-resistant vulcanisation accelerator having aforesaid characteristics provides stabilised rubber properties of a rubber composition incorporated with such an accelerator. In a rubber composition blended with a conventional vulcanisation accelerator which is not treated with the method for improving moisture resistance of the invention, the vulcanisation accelerator absorbs moisture in air and decomposes thereby to deteriorate the vulcanisation acceleration capability thereof, which adversely affects vulcanisation characteristics of the rubber composition. In particular, the longer the storage time of the accelerator after the purchase thereof is, the larger the amount of moisture absorbed by the accelerator becomes. This results in more deteriorated vulcanisation acceleration capability than apparent. Accordingly, the blending of such an accelerator in a designated amount is likely provide a rubber composition having rubber properties inferior to intended properties. To the contrary, a rubber composition blended with the moisture-resistant vulcanisation accelerator of the invention likely to have intended properties regardless of the storage time period of the accelerator after the purchase.

Further, since the treatment for improving moisture resistance according to the present invention reduces the absorption of water such as moisture in air by the vulcanisation accelerator during the storage time from the purchase to the rubber compounding and thus reduces the variation in the amount of moisture absorbed by the accelerator. This brings advantages to moisture control in the rubber manufacturing industry.

The use of a conventional vulcanisation accelerator makes it possible to prepare a rubber composition of a final formulation equivalent to a rubber composition incorporated with the moisture-resistant vulcanisation accelerator by individually blending silica in a predetermined proportion relative to the amount of the conventional accelerator during the rubber compounding. In the rubber composition thus obtained, however, silica hardly acts to improve the moisture resistance of the vulcanisation accelerator and, as a matter of course, is not capable of restraining the accelerator from absorbing moisture and decomposing during the storage time between the preparation of the accelerator and the rubber compounding. Therefore, such a rubber composition is clearly different, particularly in vulcanisation characteristic, from a rubber composition where silica is preliminarily blended as a part of the moisture-resistant vulcanisation accelerator.

## EXAMPLES

The present invention will hereinafter be more specifically described by way of the following examples. It should be noted that these examples are not limitative of the present invention.

Described first are methods of evaluating vulcanisation accelerators.

[Evaluation methods]

Characteristics of rubber compositions incorporated with vulcanisation accelerators not treated by wet heating (before wet heating) and rubber compositions incorporated with vulcanisation accelerators treated by wet heating (after wet heating) were evaluated as follows. The wet heating was carried out by allowing samples to stand at 40 °C and under a relative humidity of 90% for three weeks.

(a) Workability

Mooney viscosity (ML (1+4) 130°) and scorch time $t_{10}$ (min) of each rubber composition were measured by performing a Mooney viscosity test according to JIS-K6300.

The lower the Mooney viscosity is, the more the rubber composition is plasticated, i.e., the more excellent the workability of the rubber composition becomes. Further, the initial vulcanisation progresses further with decreasing scorch time. This means that the workability becomes poorer.

(b) Vulcanisation characteristic

A curast test according to JIS-K6300 was conducted on each rubber composition by means of Curastometer V-type manufactured by Nippon Gosei Rubber Kabushiki Kaisha under the conditions: temperature = 150 °C, amplitude angle = 30 ° and speed = 100 cycle/min. When the value of torque reaches 90 % of the difference between the maximum and minimum torque values measured, the rubber composition is generally recognised to reach an optimum cure condition. The time increment $t_{90}$ from the point of time corresponding to the minimum torque value to the point of time corresponding to the torque value of the optimum cure is herein termed as vulcanisation characteristic.

(c) Rubber elasticity

A tensile test according to JIS-K6301 was conducted on each rubber composition to measure 300% modulus ($kg/cm^2$), strength at break ($kg/cm^2$) and elongation at break (%).

(d) Hardness

JIS-A type hardness of each rubber composition was measured, according to JIS-K6301.

(e) Viscoelasticity

E* and tang δ of each rubber composition were measured by means of VES Type-III manufactured by Iwamoto Manufacturing Co., under the conditions: temperature = 70 °C, initial strain = 10 %, dynamic strain = 2 % and frequency = 10 Hz.

(f) Swelling index

Test rubber strips were immersed in toluene for 24 hours and then they were measured for their weight to calculate respective swelling ratio (%) by the following formula:

$$\text{Swelling index (\%)} = \text{(weight after immersion)/(weight before immersion)}$$

[Effect of improving moisture resistance by the blending of silica]

A base rubber was prepared by mixing a polymer, carbon black and additives other than those of vulcanisation system (sulfur and a vulcanisation accelerator) by means of a BR-type Banbury mixer. The base rubber thus prepared was blended with the additives of vulcanisation system by way of 8-inch oven roll with the roll surface temperature set to 60 °C so as to prepare a rubber composition of the final formulation shown in Table 1.

Table 1

| Compounding ingredients | Amount (wt.parts) |
|---|---|
| Natural Rubber | 100 |
| Carbon black (ISAF) | 40 |
| Antioxidant (6c) | 1 |
| Stearic acid | 2 |
| Chinese white | 3 |
| Sulfur | 1.5 |
| Vulcanisation accelerator (CBBS) | 1 |
| Silica | 0.05 |

In Table 1, N220 manufactured by Showa Cabot Co. with an iodine adsorption of 121 mg/g and an oil absorption of 114 ml/100g, NOCRACK 6C manufactured by Ohuchi Shinko Kagaku Co. (N-phenyl-N'-(1,3-dimethylbutyl-p-phenylenediamine)) and NOCSELLER CZ (cyclohexyl-benzothiazyl sulfenamide) were used as carbon black, antioxidant and vulcanisation accelerator, respectively.

In the preparation of the rubber compositions comprising the ingredients shown in Table 1, the timing of mixing the vulcanisation accelerator and silica was varied as follows:

A: Silica in a predetermined amount was mixed with the vulcanisation accelerator just prepared.
B: The vulcanisation accelerator was packed immediately after the preparation thereof, unpacked 2 weeks later, and then a predetermined amount of silica was mixed with the accelerator.
C: Silica was mixed with the base rubber under preparation.

In the case C, silica was mixed as one of the additives for rubber compounding in the same manner as other additives such as antioxidant. In the cases A and B, silica was mixed with the vulcanisation accelerator for improving the moisture resistance thereof and, hence the vulcanisation accelerator and silica shown in Table 1 were present in combination in the rubber composition as a moisture-resistant vulcanisation accelerator according to the present invention.

Rubber compositions Nos. 1 to 3 were prepared with the silica mixing timing varied as A, B and C, and evaluated for their workability, vulcanisation characteristic, elasticity, hardness, viscoelasticity and swelling index by the aforementioned evaluation methods. The results were as shown in Table 2.

TABLE 2

| | | Example | | | | Comp. Example | |
|---|---|---|---|---|---|---|---|
| Rubber composition No. | | 1 | | 2 | | 3 | |
| Silica mixing timing | | A | | B | | C | |
| Wet heating treatment | | before | after | before | after | before | after |
| Evaluation | Mooney viscosity ML(1+4) | 37 | 38 | 38 | 41 | 37 | 41 |
| | Scorch time $t_{10}$ (min) | 16 | 16 | 17 | 15 | 18 | 16 |
| | Vulcanization characteristic $t_{90}$ (min) | 8.3 | 8.2 | 8.4 | 8.0 | 8.6 | 13.0 |
| | 300 % modulus | 100 | 98 | 102 | 92 | 106 | 71 |
| | Strength at break (kg/cm²) | 266 | 250 | 268 | 232 | 268 | 166 |
| | Elongation at break (%) | 554 | 548 | 550 | 542 | 545 | 495 |
| | Hardness | 57 | 57 | 57 | 57 | 57 | 53 |
| | E* (kg/cm²) | 48 | 47 | 49 | 45 | 48 | 44 |
| | tang δ | 0.135 | 0.137 | 0.134 | 0.141 | 0.136 | 0.175 |
| | Swelling index (%) | 340 | 348 | 339 | 355 | 336 | 402 |

As can be seen from Table 2, rubber composition No. 1 exhibited no difference in hardness and little difference in workability, vulcanisation characteristic, elasticity and viscoelasticity between the values before and after the wet heating. Though the above characteristics other than hardness exhibited slight deteriorations, such deteriorations were within allowable ranges. The difference in swelling index was also within the allowable range.

Rubber composition No. 2 exhibited no difference in hardness before and after wet heating and slight deteriorations within allowable ranges in workability, vulcanisation characteristic, elasticity and viscoelasticity due to the wet heating. The difference in swelling index was also within the allowable range.

On the other hand, rubber composition No. 3 exhibited deterioration in hardness and considerable deteriorations in workability, vulcanisation characteristic, elasticity and viscoelasticity due to the wet heating, compared to rubber compositions Nos.1 and 2. This shows that silica mixed in rubber composition No. 3 did not contribute to any improvement of the moisture resistance of the vulcanisation accelerator. Further, the difference in swelling index also exceeded the allowable range.

[Relation between the amount of silica and the effect of improving moisture resistance]

Rubber compositions No. 4 to 10 comprising the ingredients shown in Table 3 were prepared.

Table 3

| Compounding ingredients | Amount (wt.parts) |
|---|---|
| Natural Rubber | 100 |
| Carbon black (ISAF) | 40 |
| Antioxidant (6c) | 1 |
| Stearic acid | 2 |
| Chinese white | 3 |
| Sulfur | 1.5 |
| Vulcanisation accelerator (CBBS) | 1 |
| Silica | varied |

The amounts of silica incorporated in respective rubber compositions were shown in Table 4. The silica mixing timing was B (as soon as the vulcanisation accelerator was unpacked).

Rubber composition No. 4 was a reference example which contained a conventional vulcanisation accelerator free of silica. Rubber compositions No. 5 and 10 were comparative examples which contained silica in amounts out of the range specified by the present invention.

Rubber compositions Nos. 4 to 10 were evaluated for their workability, vulcanisation characteristic, elasticity, hardness, viscoelasticity and swelling index by the aforementioned evaluation methods. The results were as shown in Table 4.

TABLE 4

| | Ref. Example | | Comp. Example | | Example | | | | | | | | Comp. Example | |
|---|---|---|---|---|---|---|---|---|---|---|---|---|---|---|
| Rubber composition No. | 4 | | 5 | | 6 | | 7 | | 8 | | 9 | | 10 | |
| Amount of silica (wt. parts) | 0 | | 0.02 | | 0.05 | | 0.1 | | 0.2 | | 0.5 | | 1 | |
| Wet heating treatment | before | after | before | after | before | after | before | after | before | after | before | after | before | after |
| Evaluation | | | | | | | | | | | | | | |
| Mooney viscosity ML(1+4) | 36 | 40 | 37 | 40 | 38 | 41 | 35 | 38 | 37 | 40 | 39 | 42 | 40 | 42 |
| Scorch time $t_{10}$ (min) | 17 | 16 | 17 | 15 | 17 | 14 | 18 | 14 | 17 | 14 | 16 | 14 | 14 | 13 |
| Vulcanization characteristic $t_{90}$ (min) | 8.5 | 12.8 | 8.5 | 10.5 | 8.4 | 8.0 | 8.4 | 7.8 | 8.3 | 8.3 | 8.0 | 9.5 | 7.8 | 10.3 |
| 300 % modulus | 104 | 70 | 103 | 82 | 102 | 97 | 100 | 95 | 100 | 88 | 99 | 84 | 97 | 73 |
| Strength at break ($kg/cm^2$) | 267 | 164 | 266 | 212 | 268 | 242 | 267 | 233 | 265 | 225 | 260 | 215 | 241 | 185 |
| Elongation at break (%) | 546 | 493 | 548 | 520 | 550 | 542 | 545 | 532 | 544 | 524 | 542 | 517 | 529 | 501 |
| Hardness | 57 | 53 | 57 | 57 | 57 | 57 | 57 | 57 | 57 | 56 | 57 | 55 | 56 | 55 |
| $E^*$ ($kg/cm^2$) | 47 | 43 | 47 | 44 | 49 | 46 | 50 | 44 | 47 | 42 | 46 | 42 | 44 | 42 |
| tang $\delta$ | 0.134 | 0.173 | 0.135 | 0.159 | 0.134 | 0.141 | 0.138 | 0.136 | 0.130 | 0.140 | 0.129 | 0.147 | 0.126 | 0.171 |
| Swelling index (%) | 338 | 401 | 339 | 374 | 339 | 355 | 338 | 362 | 338 | 368 | 339 | 376 | 348 | 393 |

As can be seen from Table 4, rubber composition No. 4 incorporated with a vulcanisation accelerator free of silica and rubber composition No. 5 incorporated with a vulcanisation accelerator blended with an insufficient amount of silica exhibited considerable differences in vulcanisation characteristic, elasticity and viscoelasticity between before and after the wet heating, in comparison with rubber composition No. 6 to 9 each incorporated with a vulcanisation accelerator blended with silica in an amount within the range specified by the present invention. Therefore, a vulcanisation accelerator which is not treated in accordance with the method for improving moisture resistance of the present invention is found to be changed in its vulcanisation accelerating capability and hence adversely affect the rubber properties of the resulting vulcanised rubber compositions. Rubber composition No.4 incorporated with the vulcanisation accelerator free of silica exhibited considerably deteriorated hardness and increased swelling index, in comparison with rubber compositions No. 5 to 9 each incorporated with a vulcanisation accelerator blended with silica.

The rubber compositions Nos. 5 and 10 each incorporated with a vulcanisation accelerator blended with silica in an amount less than or greater than the range of the invention exhibited considerable differences in vulcanisation characteristic, elasticity and viscoelasticity between before and after the wet heating, in comparison with rubber composition No. 6 to 9 each incorporated with a vulcanisation accelerator mixed with silica in an amount within the range specified by the present invention. It can also be seen that the swelling index increased where the vulcanisation accelerator was mixed with silica in an amount less (rubber composition No. 5) or greater (rubber composition No. 10) than the specified range.

As has been described, the method for improving moisture resistance according to the present invention improves the moisture resistance of a vulcanisation accelerator. The moisture-resistant vulcanisation accelerator obtained by the method of the invention has a resistance against moisture and heat during the storage period from the purchase to the use in rubber compounding, and even in a rubber composition under compounding, resulting in less deterioration in its vulcanisation accelerator capability as well as less effect on the properties of resulting rubber compositions.

The moisture-resistant vulcanisation accelerator subject to little deterioration ensures intended vulcanisation characteristics by the blending thereof in a predetermined amount in rubber compounding, thus minimising the inconstancy in the rubber properties of resulting rubber compositions.

Further, with the moisture-resistant vulcanisation accelerator, it is possible to inhibit the inclusion of moisture into rubber compositions which would otherwise be attributable to a vulcanisation accelerator. This makes it possible to bring advantages to the moisture control in the compounding and mixing process of rubber compositions.

While only certain presently preferred embodiments of the invention have been described, as will be apparent for those skilled in the art, certain changes and modification can be made in embodiments without departing from the spirit and scope of the invention as defined by the following claims.

## Claims

1. A method for improving the moisture resistance of a vulcanisation accelerator, **characterised by** mixing 5 to 50 parts by weight of silica with 100 parts by weight of the vulcanisation accelerator.

2. A moisture-resistant vulcanisation accelerator **characterised by** 5 to 50 parts by weight of silica and 100 parts by weight of a vulcanisation accelerator.

3. A moisture-resistant vulcanisation accelerator as set forth in Claim 2, **characterised in that** the silica has a BET surface area of 100 to 300 $m^2/g$ and includes primary particles having an average particle diameter of 10 to 30 nm.

4. A moisture-resistant vulcanisation accelerator as set forth in Claim 2 or 3, **characterised in that** the vulcanisation accelerator comprises at least one species selected from the group consisting of a sulfenamide-based vulcanisation accelerator, a guanidine-based vulcanisation accelerator, a thiazole-based vulcanisation accelerator, a thiuram-based vulcanisation accelerator and an aldehyde ammonia-based vulcanisation accelerator.

## Patentansprüche

1. Verfahren zum Verbessern der Feuchtigkeitsbeständigkeit eines Vulkanisationsbeschleunigers, **gekennzeichnet durch** Mischen von 5 bis 50 Gewichtsteilen Silika mit 100 Gewichtsteilen des Vulkanisationsbeschleunigers.

2. Feuchtigkeitsbeständiger Vulkanisationsbeschleuniger, **gekennzeichnet durch** 5 bis 50 Gewichtsteile Silika und 100 Gewichtsteile eines Vulkanisationsbeschleunigers.

3. Feuchtigkeitsbeständiger Vulkanisationsbeschleuniger nach Anspruch 2, **dadurch gekennzeichnet, dass** das Silika eine BET-Oberfläche von 100 bis 300 $m^2/g$ aufweist und Primärteilchen mit einem durchschnittlichen Teilchendurchmesser von 10 bis 30 nm umfasst.

4. Feuchtigkeitsbeständiger Vulkanisationsbeschleuniger nach Anspruch 2 oder 3, **dadurch gekennzeichnet, dass** der Vulkanisationsbeschleuniger zumindest eine Sorte umfasst, die aus der Gruppe ausgewählt ist, die aus einem Vulkanisationsbeschleuniger auf Sulfenamidbasis, einem Vulkanisationsbeschleuniger auf Guanidinbasis, einem Vulkanisationsbeschleuniger auf Thiazolbasis, einem Vulkanisationsbeschleuniger auf Thiurambasis und einem Vulkanisationsbeschleuniger auf Aldehydammoniakbasis besteht.

**Revendications**

1. Procédé destiné à améliorer la résistance à l'humidité d'un accélérateur de vulcanisation, **caractérisé par** le mélange de 5 à 50 parties en poids de silice avec 100 parties en poids de l'accélérateur de vulcanisation.

2. Accélérateur de vulcanisation résistant à l'humidité **caractérisé par** 5 à 50 parties en poids de silice et 100 parties en poids d'un accélérateur de vulcanisation.

3. Accélérateur de vulcanisation résistant à l'humidité selon la revendication 2, **caractérisé en ce que** la silice a une aire surfacique par BET de 100 à 300 $m^2/g$ et comprend des particules primaires ayant un diamètre de particule moyen de 10 à 30 nm.

4. Accélérateur de vulcanisation résistant à l'humidité selon la revendication 2 ou 3, **caractérisé en ce que** l'accélérateur de vulcanisation comprend au moins une espèce choisie dans le groupe constitué par un accélérateur de vulcanisation à base de sulfénamide, un accélérateur de vulcanisation à base de guanidine, un accélérateur de vulcanisation à base de thiazol, accélérateur de vulcanisation à base de thiurame et un accélérateur de vulcanisation à base d'aldéhyde ammoniaque.